# EUROPÄISCHE PATENTSCHRIFT

(11) **EP 2 724 864 B1**
(45) Veröffentlichungstag und Bekanntmachung des Hinweises auf die Patenterteilung: **26.12.2018**
(21) Anmeldenummer: 13185861.5
(22) Anmeldetag: 25.09.2013
(51) Int. Cl.: B41F 19/00, B44B 5/00, B44B 5/02, B41F 19/06, B81C 1/00, B41F 19/02, B29C 41/26

(54) **Verfahren und Vorrichtung zur Erzeugung und Übertragung diffraktiver Mikrostrukturen auf einen Bedruckstoff**
Method and device for creating and transferring diffractive microstructures on a printable material
Procédé et dispositif de génération et de transmission de microstructures diffractives sur une matière d'impression

(30) Priorität: 24.10.2012 DE 102012020897
(43) Veröffentlichungstag der Anmeldung: 30.04.2014
(73) Patentinhaber: Heidelberger Druckmaschinen AG, 69115 Heidelberg (DE)
(72) Erfinder: Dr. Fergen, Immanuel, 76229 Karlsruhe (DE); Dr. Schmitt-Lewen, Martin, 69118 Heidelberg (DE); Henn, Andreas, 69151 Neckargemünd (DE); Sonnenschein, Joachim, 64367 Mühltal (DE); Walther, Karl-Heinz, 97228 Rottendorf (DE); Euler, Thorsten, 64291 Darmstadt (DE); Haas, Martin, 64283 Darmstadt (DE); Kurmakaev, Evgeny, 63179 Obertshausen (DE); Mahner, Marcel, 64390 Erzhausen (DE)

(56) Entgegenhaltungen:
- EP-A1- 0 836 927
- EP-A2- 2 055 479
- WO-A1-97/41463
- WO-A1-2011/097483
- DE-A1- 4 132 476
- DE-A1-102004 014 373
- FR-A- 2 800 318
- US-A- 3 236 712
- US-A- 6 120 636

## Beschreibung

Die Erfindung betrifft ein Verfahren zur Erzeugung diffraktiver Mikrostrukturen, z. B. Holgramme oder andere Feinstrukturen, welche auf Bedruckstoffe aus Papier oder Karton übertragen werden.

Durch die DE 4132476 A1 ist eine Vorrichtung zur Erzeugung von Hologrammen oder anderen Feinstrukturen und dessen Übertragung auf einen Bedruckstoff bekannt. Hierbei ist es vorgesehen, dass eine Auftragswalze eine Lackschicht auf einen Druckzylinder aufträgt. Der Druckzylinder ist als Quarz- oder Acrylglaszylinder ausgebildet und weist im Inneren eine UV-Lichtquelle auf. Der Druckzylinder weist eine das Hologramm als Oberflächenreliefstruktur tragende Matrize auf. Der Druckzylinder wird von einer Papierbahn umschlungen. Im Umschlingungsbereich wirkt die UV-Lichtquelle vom Inneren des Zylinders auf die Lackschicht ein, so dass diese mit der eingeprägten Mikrostruktur im Umschlingungsbereich auf die Papierbahn abgelegt wird.

Bei einem Auftragwechsel muss der gesamte Quarz- oder Acrylglaszylinder gegen einen neuen ausgetauscht werden.

Die US 6,120,636 offenbart eine Vorrichtung und ein mit dieser Vorrichtung durchführbares Verfahren zum Herstellen eines Druckproduktes. Hierzu wird ein Substrat zunächst im Siebdruck mit einer Druckfarbe versehen und anschließend mittels einer Presswalze mit einer Walze in Kontakt gebracht, an deren Oberfläche sich eine Strukturierung befindet. Die Strukturierung wurde zuvor mit einem flüssigen Liquid aufgefüllt. In einem Pressstreifen zwischen der Presswalze und der strukturierten Walze wird das Liquid auf den Bedruckstoff übertragen. Da der Bedruckstoff transparent ausgeführt ist, kann eine UV-Härtung des Liquids durch den Bedruckstoff hindurch, das heißt von der Rückseite her, erfolgen. Das auf dem Bedruckstoff befindliche Liquid wird somit gehärtet und der Bedruckstoff mit dem gehärteten Liquid, das die Strukturierung in Form von Prismen in sich trägt, wird anschließend einer weiteren Verarbeitung zugeführt.

Der Erfindung liegt die Aufgabe zugrunde, ein alternatives Verfahren zu schaffen, bei welchem ein auf den Druckzylinder aufgebrachtes Fluid vor dem Übertrag auf einen Bedruckstoffträger verfestigt wird.

Die Aufgabe wird erfindungsgemäß durch die Merkmale von Anspruch 1 gelöst.

Ein erfindungsgemäßes Verfahren zur Erzeugung und Übertragung diffraktiver Mikrostrukturen auf einen Bedruckstoff mittels eines Prägezylinders, wobei der Prägezylinder einen Zylinderkörper und einen am Umfang des Zylinderkörpers angeordneten Aufzug umfasst, welcher eine Oberflächenreliefstruktur aufweist, zeichnet sich dadurch aus, dass Papier oder Karton als Bedruckstoff bereit gestellt wird, dass ein Fluid auf den Prägezylinder aufgetragen wird, und dass das Fluid in einem Bereich zwischen der Auftragstelle des Fluids und einer Übergabestelle des Fluids an den Bedruckstoff vor dem Kontakt mit dem Bedruckstoff mittels Temperier-/oder Härterstrahlung beaufschlagt wird und dadurch antrocknet oder anhärtet, wobei die Mikrostruktur in dem Fluid fixiert wird und das verfestigte Fluid filmartig auf den Bedruckstoff übertragen wird.

In besonders vorteilhafter Weise wird eine Mikrostruktur in dem auf den Prägezylinder aufgebrachten Fluid abgeformt und durch vorgesehene Trockner oder Härtungsquellen soweit verfestigt, dass dieses als Folie auf den Bedruckstoff abgelegt werden kann. Als Trägermaterial für die diffraktiven Mikrostrukturen wie z. B. Hologramme oder andere Feinstrukturen dient ein Fluid z. B. ein UV-Lack, Flexodruckfarbe oder Offsetfarbe.

In vorteilhafter Weise weist der als Prägezylinder ausgebildete Druckzylinder einen Aufzug aus einem weichen Material (Silikon, Gummi, Elastomer) mit einer Shore Härte von ca. 20 bis 70 ShA auf.

Der weiche Aufzug ist vorzugsweise aus einer flexiblen Silikonplatte hergestellt, welche auf den Druckzylinder aufgebracht wird, z. B. durch Kleben. Diese flexible Silikonplatte auch als "Flexoshim" bezeichnet, weist mindestens eine Oberflächenreliefstruktur auf.

Alternativ zu einem weichen Aufzug, wird zur Erhöhung der Standzeiten ein harter Aufzug aus Metall, z. B. ein sogenannter "Nickelshim" eingesetzt.

Der "Flexoshim" oder "Nickelshim" kann bei einem Auftragwechsel einfach gegen einen neuen ausgetauscht werden.

In vorteilhafter Weise haftet das mittels Trocknung/Härtung verfestigte Trägermaterial nach Übertragung eigenständig auf dem verwendeten Bedruckstoff.

Zur Verbesserung der Hafteigenschaft kann der Bedruckstoff vor der Übertragungsstelle vom Druckzylinder auf den Bedruckstoff mit einer Klebeschicht versehen werden.

Weitere Vorteile sind in den Unteransprüchen beschrieben.

Besonders vorteilhaft ist die Ausbildung einer mit dem Druckzylinder zusammenwirkenden Auftragwalze mit dem gleichen Durchmesser, durch diese Maßnahme kann die Auftragwalze z. B. ein gravierter Tiefdruckzylinder sein, der das flüssige Trägermaterial punktgenau auf ausgewählte Flächen des Prägezylinders bzw. den Flexoshim oder Nickelshim überträgt.

Ausführungsbeispiele der Erfindung sind in den Zeichnung dargestellt und werden im Folgenden beschrieben.

Es zeigen
- Figur 1: eine Transferprägevorrichtung mit einer Bedruckstoffbahn im Schnitt in schematischer Darstellung,
- Figur 2: ein Transferprägewerk mit einer Rasterwalze bzw. einem Tiefdruckzylinder,
- Figur 3: ein Transferprägewerk für Flexodruckfarben, Offsetfarben oder Lacke,
- Figur 4: ein Transferprägewerk mit einem harten Aufzug "Nickelshim" auf dem Prägezylinder.

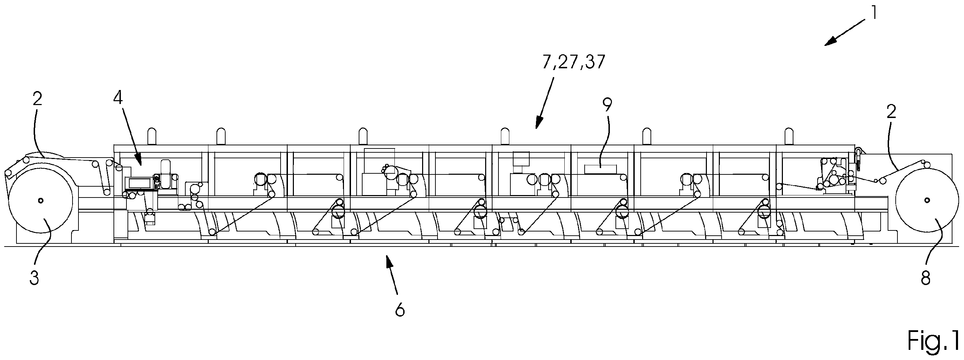

In der Figur 1 ist eine Transferprägevorrichtung 1 gezeigt, bei welcher eine Bedruckstoffbahn 2 von einer Rolle 3 unterschiedlichen Verarbeitungsstationen 4, 6, 7 zugeführt und anschließend auf einer Aufwickelrolle 8 aufgewickelt wird. Die erste Verarbeitungsstation 4 umfasst eine Corona-Anlage zur Bearbeitung des Bedruckstoffes, um insbesondere dessen Oberflächeneigenschaften zu verbessern. Die zweite Verarbeitungsstation 6 umfasst ein Offsetdruckwerk, welches gegebenenfalls für einen Klebeauftrag auf den Bedruckstoff vorgesehen ist. Die vierte Verarbeitungsstation 7 umfasst die erfindungsgemäß verwendete Transferprägestation.

Dieser nachgeschaltet ist ein Trockner 9 z. B. ein Heißlufttrockner und/oder Infrarottrockner, der ein Aushärten und Trocknen einer geprägten Reliefstruktur (z. B. Hologramm) begünstigt.

Selbstverständlich können auch weitere Verarbeitungsstationen, wie z. B. Druckwerke vorgesehen sein, die sowohl vor und/oder auch nach der Transferprägestation 7 angeordnet sein können.

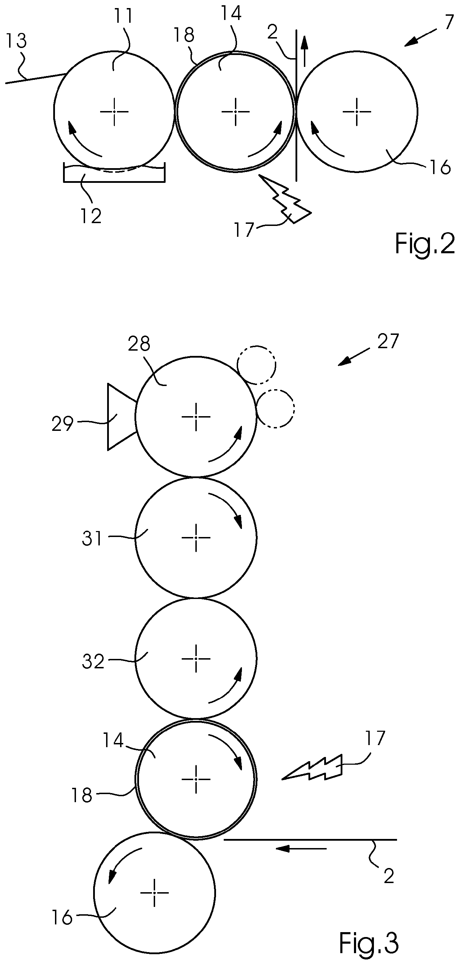

Figur 2 zeigt die Transferprägestation 7, welche einen Formzylinder 11, z. B. einen Tiefdruckzylinder oder eine Rasterwalze aufweist, der ein leicht aushärtbares Fluid z. B. Lack oder Farbe aus einem Fluidreservoir 12, z. B. einer Farbwanne schöpft und dieses als dünne Schicht, erzeugt durch ein Rakel 13 einem Walzenspalt zwischen einem Prägezylinder 14 und einem Gegendruckzylinder 16 zuführt. In diesem Walzenspalt/Druckspalt wird eine in dem Fluid erzeugte diffraktive Mikrostruktur auf die Bedruckstoffbahn 2 abgelegt, auf welcher diese selbstständig haftet.

Zur Verbesserung der Trocknung bzw. Aushärtung des Fluids auf dem Prägezylinder 14 ist ein Trockner 17 z. B. ein Infrarot-Trockner vorgesehen, der im Transportbereich des Fluids zwischen Formzylinder 11 und Gegendruckzylinder 16 auf die Mantelfläche des Prägezylinders 14 gerichtet ist.

Der Prägezylinder 14 trägt einen Aufzug 18, einen sogenannten "Flexoshim". Dieser ist z. B. eine gegossene Silikonplatte mit einer Härte von z. B. 20 bis 70 ShA. Die Silikonplatte weist die zu prägende Reliefstruktur auf, insbesondere eine mikroprägende Silikonstruktur mit geringerer Oberflächenenergie. Der Flexoshim 18 wird vorzugsweise auf die Mantelfläche des Prägezylinders 14 aufgeklebt.

Figur 3 zeigt ein alternatives Transferprägewerk 27 mit einer Rasterwalze 28, welche von einem Rakelsystem 29, z. B. einem Kammerrakel mit UV-Lack, Flexodruckfarbe oder Offsetdruckfarbe beaufschlagt wird. Die Rasterwalze 28 überträgt das Fluid an einen ersten Farbtransferzylinder 31 mit einer weichen Oberfläche. Dieser überträgt das Fluid an einen zweiten Farbtransferzylinder 32 mit einer harten Oberfläche, welche z. B. durch eine Flachdruckplatte gebildet sein kann. Der zweite Farbtransferzylinder 32 überträgt das Fluid an den Flexoshim 18 des Prägezylinders 14. Auf den Prägezylinder 14 gerichtete Trockner/Härtungseinrichtungen 17 begünstigen das Aushärten des Fluids, welches in einem Druckspalt zwischen Prägezylinder 14 und Gegendruckzylinder 16 auf den Bedruckstoff 2 übertragen wird.

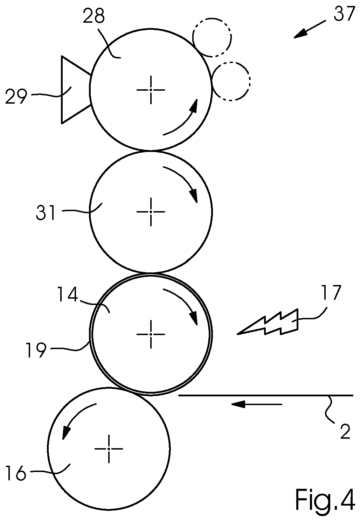

Die Figur 4 zeigt ein weiteres alternatives Transferprägewerk 37 mit einer Rasterwalze 21, welche von einem Rakelsystem 29, z. B. einem Kammerrakel mit UV-Lack, Flexodruckfarbe oder Offsetdruckfarbe beaufschlagt wird. Die Rasterwalze 28 überträgt das Fluid an einen Farbtransferzylinder 31 mit einer weichen Oberfläche. Dieser überträgt das Fluid an einen harten Aufzug 19 des Prägezylinders 14. Auf den Prägezylinder 14 gerichtete Trockner/Härtungseinrichtungen 17 begünstigen das Aushärten des Fluids, welches in einem Druckspalt zwischen Prägezylinder 14 und Gegendruckzylinder 16 auf den Bedruckstoff 2 übertragen wird. Der harte Aufzug 19 ist zur Erhöhung von Standzeiten aus einem Metallwerkstoff, z. B. Nickel (Nickelshim) hergestellt.

Die Aufzüge 18, 19 sind auf dem Prägezylinder 14 mittels Spanneinrichtungen befestigbar, vorzugsweise werden diese aufgeklebt, oder können im Fall des Nickelshims 19 mittels Magnetkraft gehalten werden.

Die Rasterwalze 28, die Farbtransferzylinder 31, 32 sowie der Prägezylinder 18 mit Flexoshim 18 oder Nickelshim 19 weisen vorzugsweise die gleichen Durchmesser auf.

Bei dem erfindungsgemäßen Verfahren ist es vorgesehen, dass das Fluid, in das die Feinstprägung von diffraktiven Strukturen vorgenommen wird, auf dem Prägezylinder 14, 18; 14, 19 getrocknet oder mindestens angetrocknet wird, so dass in Folge des Antrocknens die Feinstprägung (Textur) in dem Fluid fixiert wird. Das Antrocknen des Fluids wird bei wasserbasierten Lacken als Fluid durch thermische Trocknung begünstigt. Bei der Verwendung UV-härtender Lacke sind entsprechende UV-Härter vorgesehen. Die Trockner/Härter 17 sind vorzugsweise von außen auf einen Bereich des Prägezylinders ausgerichtet, der zwischen einer Fluidübertragungsstelle auf den Prägezylinder 14 und einer Abgabestelle auf den Bedruckstoff 2 liegt. An der Abgabestelle wird das verfestigte filmartige Fluid auf den Bedruckstoff 2 abgelegt.

Zur Verbesserung der Trocknung, bzw. thermischen Härtung kann es vorgesehen sein, dass die Wärmeenergie von der Zylinderseite eingebracht wird, hierbei kann der Zylinder erwärmt werden oder der Silikonshim 18 mit Heizelementen, z. B. in Form von Heizmatten unterlegt werden. Wahlweise kann der Silikonshim integrierte CNT-Elemente (Carbon Nanotube) zur Versteifung und bei thermischer Härtung zur Erhöhung der IR-, Laser- oder Strahlungsabsorption aufweisen. Der Silikonshim 18 kann auch mit einer CNT-Heizmatte vergossen sein und/oder ein Drahtgewebe zur Versteifung aufweisen. Der Silikonshim 18 kann auch Laserabsorber (Schwarzfärbung, oder Wellenlängen selektiv arbeitende Absorber) aufweisen.

Zur Einfärbung der Prägeform 18, 19 werden folgende alternative Mittel vorgeschlagen: Tiefdruckform, Inkjetsystem (digital positionierte Hologramme), Sprühverfahren, Offsetdruckwerk, wobei ein Drucktuch die Mikroprägestruktur zumindest in Teilen aufweist, z. B. durch eingesetzte Silikonelemente mit Prägemuster. Hierbei färbt die Offsetdruckplatte die Prägeanteile partiell ein.

Bei der Verwendung eines Offsetdruckwerkes wird das Drucktuch durch einen Silikonshim ersetzt, wobei die Offsetdruckplatte den Silikonshim partiell bzw. bildbezogen einfärbt.

Als Fluide werden folgende Mittel vorgeschlagen: Lack (transparent oder gefärbt), Druckfarben, Flüssigtoner, metallisierte Lacke, Lacke mit Effektpigmenten, Gelatine, sonstige filmbildende Fluide.

Zur Beschleunigung der Trocknung/Härtung des Fluids auf dem Prägezylinder vor der Übertragung auf einen Bedruckstoff werden folgende Mittel vorgeschlagen: Heißluft, IR, UV, Elektronenstrahltrocknung, Lasertrocknung, Kombination verschiedener Verfahren.

Als Bedruckstoffe werden erfindungsgemäß folgende Mittel verwendet: Papier oder Karton mit und ohne Vordruck.

Zur Erhöhung der Haftkraft des angetrockneten Fluids auf dem Bedruckstoff werden außer der Verwendung von Klebstoff noch folgende Mittel vorgeschlagen: Lack, Farbe, Gelatine, elektrostatische Kräfte.

Als alternative Prägetypen werden Folgende vorgeschlagen: diffraktive Strukturen für hologrammartige Effekte, Mikrorauheiten (Lotusstrukturen), Mattierung, optische Strukturen (Mottenaugen), lentikularartige Strukturen, Texturen.

### Bezugszeichenliste

- 1: Transferprägevorrichtung
- 2: Bedruckstoff
- 3: Bedruckstoffrolle
- 4: Corona-Anlage
- 5: ./.
- 6: Offset-Druckwerk
- 7: Transferprägewerk
- 8: Bedruckstoffrolle/Aufwickelrolle
- 9: Trockner
- 10: ./.
- 11: Formzylinder
- 12: Fluidreservoir
- 13: Rakel
- 14: Prägezylinder
- 15: ./.
- 16: Gegendruckzylinder
- 17: Trockner
- 18: Aufzug (Flexoshim)
- 19: Aufzug (Nickelshim)

- 27: Transferprägewerk
- 28: Rasterwalze
- 29: Rakelsystem
- 30: ./.
- 31: Farbtransferzylinder (weich)
- 32: Farbtransferzylinder (hart)

- 37: Transferprägewerk

## Patentansprüche

1. Verfahren zur Erzeugung und Übertragung diffraktiver Mikrostrukturen auf einen Bedruckstoff (2) mittels eines Prägezylinders, wobei der Prägezylinder (14) einen Zylinderkörper und einen am Umfang des Zylinderkörpers angeordneten Aufzug (18; 19) umfasst, welcher eine Oberflächenreliefstruktur aufweist,
wobei ein Fluid auf den Prägezylinder (14) aufgetragen wird,
**dadurch gekennzeichnet,**
**dass** Papier oder Karton als Bedruckstoff bereit gestellt wird, und dass das Fluid in einem Bereich zwischen der Auftragstelle des Fluids und einer Übergabestelle des Fluids an den Bedruckstoff vor dem Kontakt mit dem Bedruckstoff mittels Temperier-/oder Härterstrahlung (17) beaufschlagt wird und dadurch antrocknet oder anhärtet, wobei die Mikrostruktur in dem Fluid fixiert wird und das verfestigte Fluid filmartig auf den Bedruckstoff übertragen wird.

2. Verfahren nach Anspruch 1,
**dadurch gekennzeichnet,**
**dass** der Aufzug (18) weich ausgebildet bereitgestellt wird und eine Materialhärte von 20 bis 70 ShA aufweist.

3. Verfahren nach Anspruch 1,
**dadurch gekennzeichnet,**
**dass** der Aufzug (19) hart ausgebildet bereitgestellt wird und aus einem Metallwerkstoff insbesondere Nickelwerkstoff besteht.

4. Verfahren nach Anspruch 2,
**dadurch gekennzeichnet,**
**dass** der weiche Aufzug (18) aus Silikon, Gummi oder einem Elastomer besteht.

5. Verfahren nach einem der Ansprüche 1 bis 4,
**dadurch gekennzeichnet,**
**dass** der Aufzug (18; 19) durch Kleben auf dem Prägezylinder (14) befestigt wird.

6. Verfahren nach einem der Ansprüche 1 bis 5,
**dadurch gekennzeichnet,**
**dass** der Zylinder (11) zum Auftrag des Fluids als ein Tiefdruckzylinder oder eine Rasterwalze bereitgestellt wird.

7. Verfahren nach einem der Ansprüche 1 bis 6,
**dadurch gekennzeichnet,**
**dass** ein Fluid übertragender Zylinder (11, 28, 31, 32) und der Prägezylinder (14) die gleichen Durchmesser aufweisen.

8. Verfahren nach einem der Ansprüche 1 bis 7,
**dadurch gekennzeichnet,**
**dass** das Fluid als UV-Lack, Flexodruckfarbe oder Offsetdruckfarbe bereit gestellt wird.

9. Verfahren nach einem der Ansprüche 1 bis 8,
**dadurch gekennzeichnet,**
**dass** dem Prägezylinder (14) mindestens eine Vorrichtung (17) zum Trocknen und/oder Härten des Fluids zugeordnet wird.

10. Verfahren nach einem der Ansprüche 1 bis 9,
**dadurch gekennzeichnet,**
**dass** eine Klebestoffauftragsvorrichtung (6) zur Verbesserung der Haftkraft des Fluids auf dem Bedruckstoff (2) vorgesehen wird.

## Claims

1. Method for creating and transferring diffractive microstructures to a printing material (2) by means of
an embossing cylinder, the embossing cylinder (14) comprising a cylinder body and a cover (18; 19) disposed on the circumference of the cylinder body and having a surface relief structure,
wherein a fluid is applied to the embossing cylinder (14),
**characterized in**
paper or cardboard are provided, and
that in a region between the location of the application of the fluid and a location of a transfer of the fluid to the printing material and before contact with the printing material, temperature control /or curing radiation (17) is applied to the fluid, causing the fluid to be partially dried or cured, thus causing the microstructure to be fixed in the fluid and the cured fluid to be transferred to the printing material in a film-like way.

2. Method according to claim 1,
**characterized in**
**that** the cover (18) is provided as a soft cover having a material hardness of 20 to 70 Shore A.

3. Method according to claim 1,
**characterized in**
**that** the cover (19) is provided as a hard cover consisting of a metal material, in particular nickel material.

4. Method according to claim 2,
**characterized in**
**that** the soft cover (18) is made of silicone, rubber, or an elastomer.

5. Method according to any one of claims 1 to 4,
**characterized in**
**that** the cover (18; 19) is fixed to the embossing cylinder (14) by gluing.

6. Method according to any one of claims 1 to 5,
**characterized in**
**that** the cylinder (11) for applying the fluid is provided as a gravure cylinder or anilox roller.

7. Method according to any one of claims 1 to 6,
**characterized in**
**that** a fluid-transferring cylinder (11, 28, 31, 32) and the embossing cylinder (14) have the same diameter.

8. Method according to any one of claims 1 to 7,
**characterized in**
**that** the fluid is provided as a UV varnish, flexographic printing ink, or offset printing ink.

9. Method according to any one of claims 1 to 8 ,
**characterized in**
**that** at least one device (17) for drying and/or curing the fluid is associated with the embossing cylinder (14).

10. Method according to any one of claims 1 to 9,
**characterized in**
**that** an adhesive application device (6) is provided to improve the adhesive force of the fluid on the printing material (2).

## Revendications

1. Procédé pour la génération et le transfert de microstructures diffractives sur un support d'impression (2) à l'aide d'un cylindre de gaufrage, le cylindre de gaufrage (14) comportant un corps de cylindre et un habillage disposé sur la circonférence du corps de cylindre (18 ; 19), qui présente une structure de surface en relief, pour lequel un fluide est appliqué sur le cylindre de gaufrage (14),
**caractérisé par le fait**
**que** le support d'impression fourni est constitué par du papier ou du carton,
et **que** le fluide, dans une zone comprise entre le point d'application du fluide et un point de transfert du fluide sur le support d'impression, est, avant le contact avec le support d'impression, soumis à un rayonnement en vue d'un conditionnement thermique et/ou durcissement (17), qui assure son amorce de séchage ou de durcissement, la microstructure étant fixée dans le fluide et le fluide solidifié étant transféré sous forme de film sur le support d'impression.

2. Procédé selon la revendication 1,
**caractérisé par le fait**
**que** l'habillage (18) fourni est souple et présente une dureté de matériau de 20 à 70 ShA.

3. Procédé selon la revendication 1,
**caractérisé par le fait**
**que** l'habillage (19) fourni est dur et se compose d'un matériau métallique, notamment de nickel.

4. Procédé selon la revendication 2,
**caractérisé par le fait**
**que** l'habillage souple (18) est constitué de silicone, caoutchouc ou d'un élastomère.

5. Procédé selon l'une des revendications 1 à 4,
**caractérisé par le fait**
**que** l'habillage (18; 19) est fixé par collage sur le cylindre de gaufrage (14).

6. Procédé selon l'une des revendications 1 à 5,
**caractérisé par le fait**
**que** le cylindre (11) fourni pour l'application du fluide est un cylindre hélio ou un rouleau tramé.

7. Procédé selon l'une des revendications 1 à 6,
**caractérisé par le fait**
**qu'**un cylindre de transmission du fluide (11, 28, 31, 32) et le cylindre de gaufrage (14) présentent des diamètres identiques.

8. Procédé selon l'une des revendications 1 à 7,
**caractérisé par le fait**
**que** le fluide fourni est un vernis UV, une encre flexographique ou une encre offset.

9. Procédé selon l'une des revendications 1 à 7,
**caractérisé par le fait**
**qu'**au moins un dispositif (17) pour le séchage et/ou le durcissement du fluide est affecté au cylindre de gaufrage (14).

10. Procédé selon l'une des revendications 1 à 9,
**caractérisé par le fait**
**qu'**un dispositif d'application de colle (6) est prévu pour l'amélioration de l'adhérence du fluide sur le support d'impression (2).
